# EUROPEAN PATENT SPECIFICATION

(11) **EP 3 180 679 B1**
(45) Date of publication and mention of the grant of the patent: **03.04.2019**
(21) Application number: 15832068.9
(22) Date of filing: 11.08.2015
(51) Int. Cl.: G06F 3/02, G06F 3/0338, G06F 3/038, G06F 3/0362, G06F 3/0485, B62J 99/00, A42B 3/30, G08C 17/02, H01H 25/04, G08C 17/00

(54) **USER INTERFACE FOR A COMMUNICATION SYSTEM**
BENUTZEROBERFLÄCHE FÜR EIN KOMMUNIKATIONSSYSTEM
INTERFACE UTILISATEUR POUR UN SYSTÈME DE COMMUNICATION

(30) Priority: 11.08.2014 IL 23405014
(43) Date of publication of application: 21.06.2017
(73) Proprietor: Cardo Systems, Ltd., Ra'anana 4366250 (IL)
(72) Inventor: GLEZERMAN, Abraham, 6274411 Tel Aviv (IL); KUSHNIROV, Avraham, 4366250 Ra'anana z.c (IL); MOATO, Abraham, 7580122 Rishon Le'Zion (IL)
(74) Representative: Weickmann & Weickmann PartmbB
(86) International application number: PCT/IL2015/050817
(87) International publication number: WO 2016/024275

(56) References cited:
- EP-A2- 2 478 786
- US-A- 6 069 614
- US-A1- 2006 250 377
- US-A1- 2009 058 802
- US-A1- 2009 259 397
- US-A1- 2010 069 002
- US-B1- 6 899 539
- US-B2- 7 079 110

## Description

### Field of the Invention

The present invention relates to communication systems. More particularly, the invention relates to a user interface for communication systems suitable for use in conjunction with a helmet such as, but not limited to, those worn by drivers and passengers of motorcycles.

### Background of the Invention

Mobile communication systems suitable for use in conjunction with a helmet are known in the art such as, but not limited to, the Scala Rider line of products by Cardo systems, Inc. Such communication systems may vary from one product to another, and may include, for example, intercom that enable a motorcycle rider to connect via voice command to 8 additional riders within a range of up to 1 mile/1.6 km, intelligent voice recognition technology means, Bluetooth systems, whether autonomous or operating through a portable communication device, such as a smart phone, or systems employing different wireless communication systems and protocols.

So far, the art has failed to provide a user interface for communication system that provides safety and convenience of operation, in particular while wearing gloves.

US 2010/069002 A1, which is considered closest prior art, discloses a user interface for a communication system that is mounted on a helmet, wherein the user interface comprises a scroll-activated element which can be rotated clockwise or counterclockwise with respect to a surface of the helmet on which the user interface is mounted.

US 2009/058802 A1 discloses a user interface for mobile electronic devices comprising scrollable and pressurable elements.

Furthermore, EP 2 478 786 A2 discloses a helmet having a cradle for attaching a communication system to the helmet. The communication system contains controls (such as buttons) allowing the user to control the communication system.

It is an object of the present invention to provide a user interface device that is mounted on the side portion of a helmet, and yet can be easily and conveniently operated by the wearer. It is another object of the invention to provide a user interface device comprising elements operable by simple movements of the hands or fingers, which can be used by the wearer to operate the communication system, even while wearing gloves.

Other objects and advantages of the invention will become apparent from the description to follow.

### Summary of the Invention

The invention relates to a user interface device for applying control signals to a communication system, as defined in appended claim 1.

The user interface device comprises at least one scroll-activated element, wherein each scroll of said scroll-activated element, in any direction, either forward or backward, defines an action, such that each of said actions or combinations of them results in activating one or more tasks of the communication system.

Furthermore, the user interface device furthermore comprises at least one pressure-activated multidirectional tiltable/pushable plate with multiple pressureable areas, wherein each of said pressureable areas activates a corresponding pressure element that is located under said plate. Each activation of a specific pressure element defines an action which is respectively performed upon tilting-pressing of said plate towards the location of the respective pressure element.

The pressure-activated multidirectional tiltable/pushable plate and the scroll-activated element are embedded at least partly within a housing of the communication system.

The housing is adapted to be mounted on a helmet either directly or via a dedicated cradle. In the mounted state of the communication system at the helmet, the rolling axis of the scroll-activated element is approximately perpendicular to the normal of a surface of the helmet on which the communication system is situated.

In order to communicate with autonomous communication means of the user (e.g., Bluetooth-enabled phone) or other external communication devices or remote equipment, the communications system that includes the UID of the invention includes also communication circuitry such as a Bluetooth module, and at least one antenna.

The pressure-activated elements may include discrete keys, such that the user interface device includes regular pressure keys in addition to the tiltable/pushable plate.

According to an embodiment of the invention, the scroll-activated element includes a clickable element that is activated by pressing on the scroll activated element, such that each click on said clickable element or set of following clicks define an action, wherein the scroll-activated element is configured in such a way that the press on the clickable element is perpendicular to the scroll-activated element axis.

According to an embodiment of the invention, the scrolling action of the scroll-activated element is limited in its rolling movement in one direction or in both directions forward or backward, and it may have a state of not rolling at all.

According to an embodiment of the invention, the control signal applied to the communication system via a processing unit that converts the activation of the pressureable areas into control signals.

According to the invention, in the mounted state of the communication system at the helmet, the rolling axis of the scroll activated element, is approximately perpendicular to the normal of a surface of the helmet on which the communication system is situated.

Thus, the pressure-activated element and the scroll-activated element are adapted to be easily reached and operated by the fingers of hands of the wearer of the helmet, in particular while wearing gloves.

### Brief Description of the Drawings

In the drawings:
Fig. 1 is a top view of an interface device having a roller and a touch plate, according to one embodiment of the invention;
Fig. 2 is a perspective view of the interface device according to one embodiment of the invention with detailed view of the roller degrees of freedom;
Fig. 3 (A and B) are perspective views of the interface device according to some embodiments of the invention, with optional arrays of platform press locations;
Fig. 4 schematically illustrates a communication system, in accordance with another embodiment of the present invention; and
Fig. 5 schematically illustrates the communication system of Fig. 4 partially without the "top" shell of its main body.

### Detailed Description of the Invention

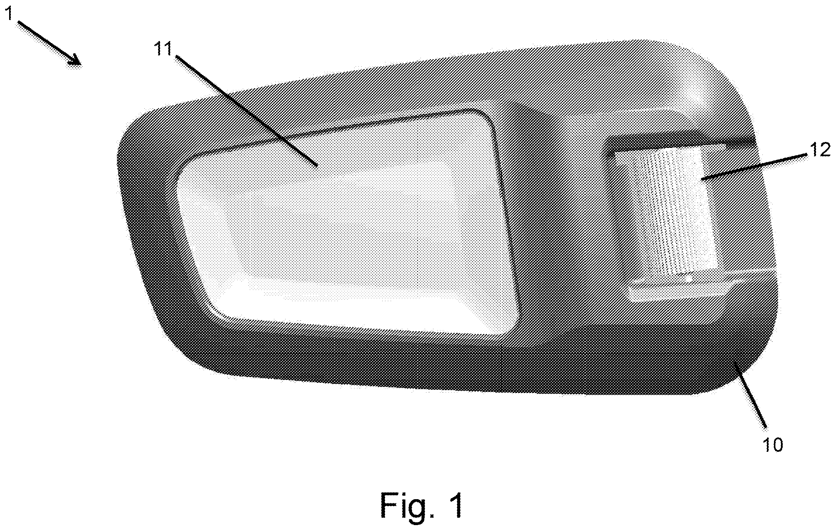

Looking now at Fig. 1, a novel user interface device (UID) for applying control signals to a communication system 1 is generally illustrated in accordance with an embodiment of the present invention. In this embodiment, the UID includes a pressure-activated element 11 having multiple pressureable or touch-operated areas, and a scroll-activated element 12 (which is known in the art as "roller"). Accordingly, the invention is illustrated in the appended drawings using a main body 10 of the communication system 1 that houses the elements 11 and 12 of the user interface device, without intending to limit the invention thereby. Both elements 11 and 12 afford easy access to the user's fingers.

As will be apparent to the skilled person and as further discussed hereinafter, the UID may include more than one variation or combination of the pressure-activated element 11 or scroll-activated element 12. For example, in this embodiment the pressure-activated element 11 and the scroll-activated element 12 are located on the same side of the main body 10. According to other embodiments of the invention, the pressure-activated element 11 can be located at one side of the housing 10, and the scroll-activated element 12 on another side or in other orientation.

According to an embodiment of the invention, the communication system 1 comprises a processing unit (not shown) adapted to convert signals received from the operation of the UID elements 11 and 12 into control signals for operating different functionalities of the communication system 1. The communication system 1 may further comprise a communication circuitry (not shown) adapted to transmit and receive the control signals to a communication system associated with it in a wired or wireless manner (e.g., Bluetooth). In one embodiment of the invention an antenna needed for wireless communication to take place is located inside the main body 10. The electric arrangements and connections between these UID elements, as well as the connection between the UID elements and the communication system 1, can be effected in a variety of ways, which would be readily apparent to the skilled person and, therefore, are not illustrated herein in detail, for the sake of brevity.

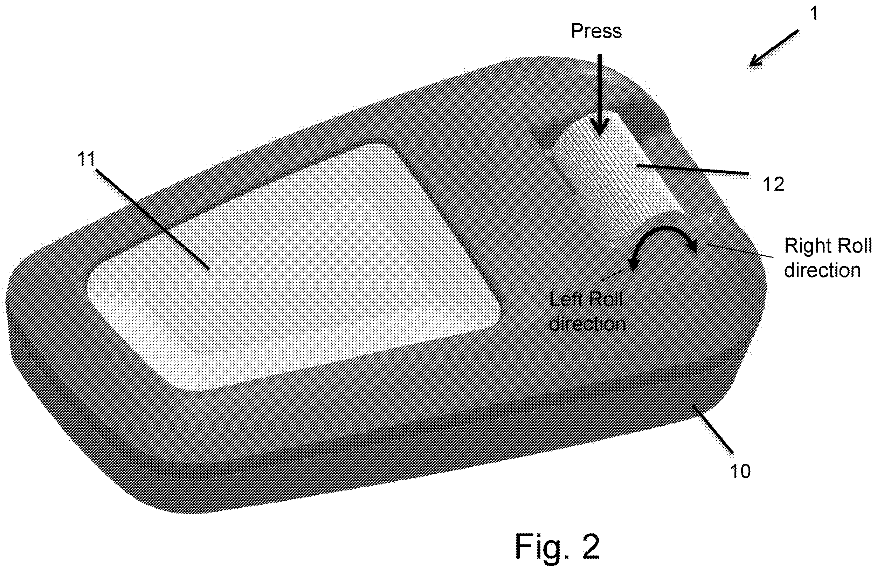

Fig. 2 schematically illustrates the degrees of freedom of the "roller" (i.e., the scroll-activated element 12 of the UID), according to an embodiment of the invention. The scroll-activated element 12 can be either pressed or scrolled backward/forward (e.g., rotation to the left and right directions), similar to the operation of a common wheel of a computer mouse, thereby providing three degrees of freedom. Each movement of the scroll-activated element 12, click on top of it or any combination thereof can define a different action by dedicated software or programming of the processing unit.

The communication system 1 provided with the novel UID of the present invention can be positioned at the side portion of the helmet (e.g., roughly corresponding to the middle of the wearer's cheek). However, the aforesaid is of particular importance for the roller/pressure elements that the wearer of the helmet must operate while riding, but this is not intended to limit the invention in any way.

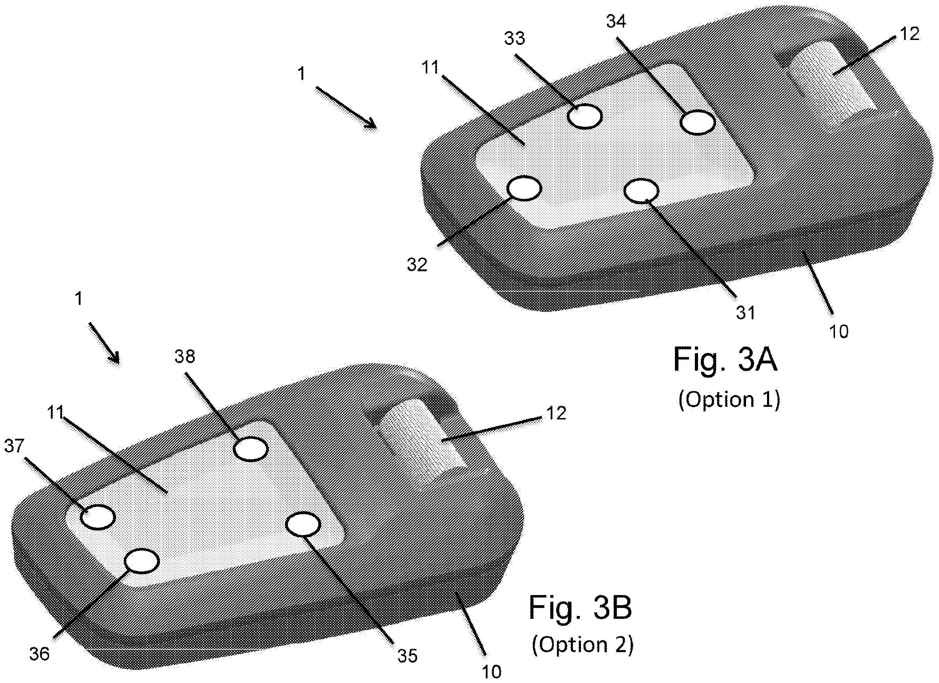

Figs. 3A and 3B show the communication system 1 with different arrays of press locations on the pressure-operated element 11. The pressure-operated element 11 comprises multiple pressureable areas, each of which defines a different action "key". A first optional array is shown in the illustrative embodiment of the invention in Fig. 3A, and the action "keys" are indicated by numerals 31, 32, 33 and 34. A second optional array is shown in the illustrative embodiment of the invention in Fig. 3B, and the action "keys" are indicated by numerals 35, 36, 37 and 38. Each key may be assigned a different role, such as "on" and "off', "speak", etc. A wider variety of tasks for controlling the communication system 1 or a remote/paired communication system can be applied by combining the activation of the action "keys" of the element 11 and the degrees of freedom of element 12. The activation of an action "key" can also be obtained by applying relatively long presses (e.g., 2-5 seconds) or multiple consecutive presses on the same key / roller, depending on the programming of the processing unit. In the same manner, the roller can also be operated with consecutive or longer presses.

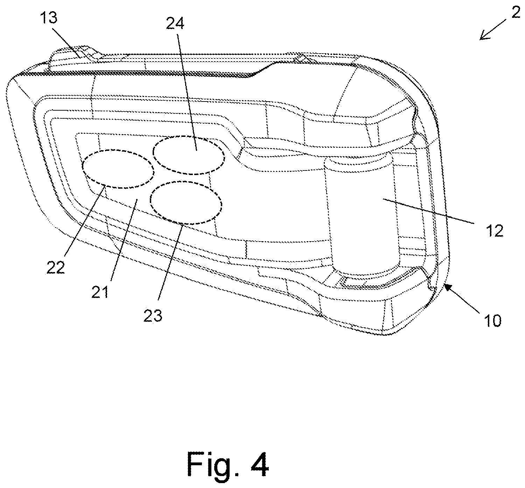

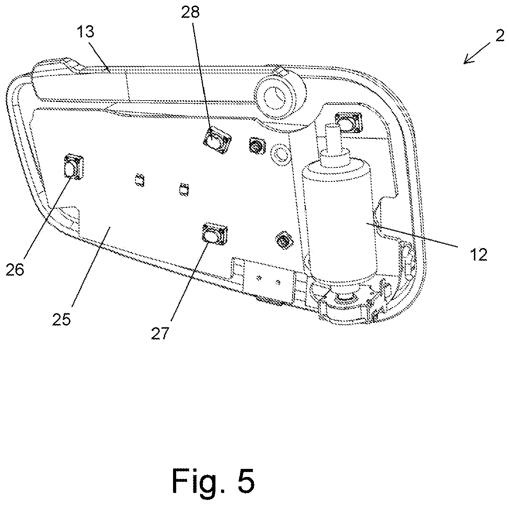

Fig. 4 schematically illustrates a communication system 2, in accordance with another embodiment of the present invention. Fig. 5 schematically illustrates the communication system 2 partially without the "top" shell of the main body 10. In this embodiment, the pressure-activated element includes a multidirectional tiltable/pressable plate 21 with three pressureable areas 22, 23 and 24 and three pressure elements 26, 27, 28 that are located under plate 21, respectively. Each of the pressure elements 26-28 can be activated by tilting/pressing the plate 21 towards the desired pressure element while pressing on the pressurable area above it. The processing and communications circuitries adapted for receiving the control signals are generally indicated by numeral 25 (e.g., in form of a Printed Circuit Board (PCB)). In this embodiment, the pressure elements 26, 27, 28 are tact switches located on the PCB 25. The dotted circles schematically illustrate the pressureable areas 22-24 on the outer surface of the multidirectional tiltable plate 21 upon which the rider may press to activate each of the pressure elements 26-28. As can be easily seen in the figures, the tiltable/pushable plate 21 allows the user to press on a larger area than the original size of the correspondence pressure element located under it, thereby allowing the user to easily operate the communication system 1, e.g., while riding a motorcycle and even when wearing gloves.

In this embodiment, the communication system 2 includes an external foldable RF antenna 13 that is located outside the main body 10, as best seen in Fig. 5. The communication system 2 may also include an internal antenna (e.g., Bluetooth antenna) that can be located inside the main body 10.

All the above description of illustrative embodiments of the invention have been provided for the purpose of illustration only and are not meant to limit the invention in any way. As will be apparent to the skilled person, many different shapes of the UID embedded/integrated within a communication system can be devised. Many variations of the illustrative embodiments can be provided without exceeding the scope of the invention as defined in the claims.

## Claims

1. User interface device for applying control signals to a communication system (1), comprising at least one scroll-activated element (12), wherein each scroll of said scroll-activated element (12), in any direction, either forward or backward, defines an action, such that each of said actions or combinations of them results in activating one or more tasks of the communication system (1),
**characterized in that** the user interface device further comprises at least one pressure-activated multidirectional tiltable/pushable plate (11, 21) with multiple pressureable areas (22, 23, 24), wherein each of said pressureable areas (22, 23, 24) activates a corresponding pressure element (26, 27, 28) that is located under said plate (11, 21), wherein each activation of a specific pressure element (26, 27, 28) defines an action which is respectively performed upon tilting-pressing of said plate (11, 21) towards the location of the respective pressure element (26, 27, 28),
wherein the pressure-activated multidirectional tiltable/pushable plate (11, 21) and the scroll-activated element (12) are embedded at least partly within a housing (10) of the communication system (1), wherein the housing (10) is adapted to be mounted on a helmet either directly or via a dedicated cradle, and
wherein, in the mounted state of the communication system (1) at the helmet, the rolling axis of the scroll-activated element (12) is approximately perpendicular to the normal of a surface of the helmet on which the communication system (1) is situated.

2. User interface device according to claim 1, in which the scroll-activated element (12) includes a clickable element that is activated by pressing on the scroll-activated element (12), such that each click on said clickable element or set of following clicks defines an action, wherein the press is perpendicular to the scroll-activated element axis.

3. User interface device according to claim 1 or 2, in which the scrolling action of the scroll-activated element (12) is limited in its rolling movement in one direction or in both directions forward or backward, and it may have a state of not rolling at all.

4. User interface device according to any of claims 1 to 3, in which the control signal is applied to the communication system (1) via a processing unit that converts the activation of the pressure elements (26, 27, 28) into control signals.

5. User interface device according to any of claims 1 to 4, in which the communication system (1) comprises at least one communication circuitry (25) and antenna (13) for communicating with an external communication device.

## Patentansprüche

1. Benutzerschnittstellenvorrichtung zum Applizieren von Regel-/Steuersignalen auf ein Kommunikationssystem (1), umfassend wenigstens ein scroll-aktiviertes Element (12), wobei jedes Scrollen des scroll-aktivierten Elements (12) in einer beliebigen Richtung, entweder vorwärts oder rückwärts, derart eine Aktion definiert, dass jede der Aktionen oder Kombinationen davon in einer Aktivierung einer oder mehrerer Aufgaben des Kommunikationssystems (1) resultiert, **dadurch gekennzeichnet, dass** die Benutzerschnittstellenvorrichtung ferner wenigstens eine druckaktivierte multidirektionale schwenkbare/drückbare Platte (11, 21) mit mehreren drückbaren Bereichen (22, 23, 24) umfasst, wobei jeder der drückbaren Bereiche (22, 23, 24) ein entsprechendes Druckelement (26, 27, 28) aktiviert, welches unter der Platte (11, 21) angeordnet ist, wobei jede Aktivierung eines spezifischen Druckelements (26, 27, 28) eine Aktion definiert, welche jeweils auf ein Schwenken-Drücken der Platte (11, 21) in Richtung des Orts des jeweiligen Druckelements (26, 27, 28) durchgeführt wird,
wobei die druckaktivierte multidirektionale schwenkbare/drückbaren Platte (11, 21) und das scroll-aktivierte Element (12) wenigstens teilweise innerhalb eines Gehäuses (10) des Kommunikationssystems (1) eingebettet sind,
wobei das Gehäuse (10) dazu eingerichtet ist, an einem Helm entweder direkt oder über eine dafür bestimmte Halterung montiert zu werden, und
wobei in dem montierten Zustand des Kommunikationssystems (1) an dem Helm die Rollachse des scroll-aktivierten Elements (12) etwa rechtwinklig zu der Normalen einer Fläche des Helms ist, an welcher das Kommunikationssystem (1) angeordnet ist.

2. Benutzerschnittstellenvorrichtung nach Anspruch 1, in welcher das scroll-aktivierte Element (12) ein klickbares Element umfasst, welches durch Drücken auf das scroll-aktivierte Element (12) derart aktiviert wird, dass jeder Klick auf das klickbare Element oder ein Satz von aufeinanderfolgenden Klicks eine Aktion definiert, wobei der Druck rechtwinklig zu der Achse des scroll-aktivierten Elements ist.

3. Benutzerschnittstellenvorrichtung nach Anspruch 1 oder 2, in welcher die Scroll-Aktion des scroll-aktivierten Elements (12) in ihrer Rollbewegung in einer Richtung oder in beiden Richtungen, nach vorne oder nach hinten, begrenzt ist und es einen Zustand aufweisen kann, in welchem es nicht rollt.

4. Benutzerschnittstellenvorrichtung nach einem der Ansprüche 1 bis 3, in welcher das Regel-/Steuersignal auf das Kommunikationssystem (1) über eine Verarbeitungseinheit appliziert wird, welche die Aktivierung der Druckelemente (26, 27, 28) in Regel-/Steuersignale konvertiert.

5. Benutzerschnittstellenvorrichtung nach einem der Ansprüche 1 bis 4, in welcher das Kommunikationssystem (1) wenigstens eine Kommunikationsschaltung (25) und eine Antenne (13) für eine Kommunikation mit einer externen Kommunikationsvorrichtung umfasst.

## Revendications

1. Dispositif d'interface utilisateur pour appliquer des signaux de commande à un système de communication (1), comprenant au moins un élément activé par défilement (12), dans lequel chaque défilement dudit élément activé par défilement (12), dans n'importe quelle direction, vers l'avant ou vers l'arrière, définit une action, de sorte que chacune desdites actions ou de leurs combinaisons aboutisse à l'activation d'une ou de plusieurs tâches du système de communication (1),
**caractérisé en ce que** le dispositif d'interface utilisateur comprend en outre au moins une plaque pouvant être inclinée/poussée multidirectionnelle activée par pression (11, 21) avec de multiples zones pouvant subir une pression (22, 23, 24), dans lequel chacune desdites zones pouvant subir une pression (22, 23, 24) active un élément de pression correspondant (26, 27, 28) qui est situé sous ladite plaque (11, 21), dans lequel chaque activation d'un élément de pression (26, 27, 28) spécifique définit une action qui est réalisée respectivement lors de l'inclinaison-pression de ladite plaque (11, 21) vers l'emplacement de l'élément de pression (26, 27, 28) respectif,
dans lequel la plaque pouvant être inclinée/poussée multidirectionnelle activée par pression (11, 21) et l'élément activé par défilement (12) sont incorporés au moins en partie au sein d'un boîtier (10) du système de communication (1),
dans lequel le boîtier (10) est adapté pour être monté sur un casque soit directement soit via un support dédié, et
dans lequel, dans l'état monté du système de communication (1) au niveau du casque, l'axe de roulement de l'élément activé par défilement (12) est approximativement perpendiculaire à la normale d'une surface du casque sur lequel le système de communication (1) est situé.

2. Dispositif d'interface utilisateur selon la revendication 1, dans lequel l'élément activé par défilement (12) comporte un élément sur lequel on peut cliquer qui est activé par pression sur l'élément activé par défilement (12), de sorte que chaque clic sur ledit élément sur lequel on peut cliquer ou un ensemble de clics successifs définit une action, dans lequel la pression est perpendiculaire à l'axe d'élément activé par défilement.

3. Dispositif d'interface utilisateur selon la revendication 1 ou 2, dans lequel l'action de défilement de l'élément activé par défilement (12) est limitée dans son mouvement de roulement dans une direction ou dans les deux directions vers l'avant ou vers l'arrière, et elle peut avoir un état ne roulant pas du tout.

4. Dispositif d'interface utilisateur selon l'une quelconque des revendications 1 à 3, dans lequel le signal de commande est appliqué au système de communication (1) via une unité de traitement qui convertit l'activation des éléments de pression (26, 27, 28) en signaux de commande.

5. Dispositif d'interface utilisateur selon l'une quelconque des revendications 1 à 4, dans lequel le système de communication (1) comprend au moins une circuiterie de communication (25) et une antenne (13) pour communiquer avec un dispositif de communication externe.
